(19) **Europäisches Patentamt / European Patent Office / Office européen des brevets**

(11) **EP 2 930 466 B1**

(12) **EUROPÄISCHE PATENTSCHRIFT**

(45) Veröffentlichungstag und Bekanntmachung des Hinweises auf die Patenterteilung:
**18.07.2018 Patentblatt 2018/29**

(51) Int Cl.:
*G01C 17/38* (2006.01)   *G06T 7/70* (2017.01)

(21) Anmeldenummer: **14164038.3**

(22) Anmeldetag: **09.04.2014**

(54) **Handhaltbares Beobachtungsgerät mit einem digitalen Magnetkompass**

Handheld observation device with a digital magnetic compass

Appareil d'observation mobile doté d'un compas magnétique numérique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.10.2015 Patentblatt 2015/42**

(73) Patentinhaber: **Safran Vectronix AG**
**9435 Heerbrugg (CH)**

(72) Erfinder:
• **Kirschner, Holger**
 **CH-9443 Widnau (CH)**

• **Gnepf, Silvio**
 **CH-9435 Heerbrugg (CH)**

(74) Vertreter: **Kaminski Harmann Patentanwälte AG**
**Landstrasse 124**
**9490 Vaduz (LI)**

(56) Entgegenhaltungen:
**EP-A1- 2 530 429     EP-A1- 2 623 995**
**EP-A2- 2 600 109     US-A1- 2009 306 892**
**US-A1- 2011 275 408     US-B2- 7 002 551**

**Beschreibung**

Die Erfindung betrifft ein handhaltbares Beobachtungsgerät mit einem digitalen Magnetkompass (Messung Magnetfeld-Richtung), einem Gravitationssensor (Messung Schwerefeld-Richtung) und einer Steuer- und Auswerteeinheit konfiguriert zur Bestimmung einer aussenreferenzierten Orientierung des Beobachtungsgeräts aus den Messungen unter Anwendung einer algorithmischen Störunterdrückung.

Die Erfindung betrifft auch ein gattungsgemässes Verfahren zum Bestimmen einer aussenreferenzierten Orientierung eines handhaltbaren Beobachtungsgeräts sowie ein Computerprogrammprodukt mit Programmcode, der auf einem maschinenlesbaren Träger gespeichert ist, zur Steuerung bzw. Durchführung des Verfahrens.

Für viele Orientierungsaufgaben ist der digitale Magnetkompass (DMC, Digital Magnetic Compass) immer noch unverzichtbar. Dieser besteht im Wesentlichen aus einer Kombination von Magnetfeldsensoren, Neigungssensoren, und einer Steuer- und Auswerteeinheit. Diese berechnet aus den Messdaten der Sensoren die aktuelle Orientierung in Bezug auf magnetische Nordrichtung und Schwerefeld-Richtung. Zudem kann zum Beispiel eine Korrektur auf die geographische Nordrichtung oder eine Anpassung in beliebige Koordinatensysteme berechnet werden.

Ein solcher DMC kann beispielsweise integriert sein in ein Beobachtungsgerät zur Bereitstellung nordreferenzierter azimutaler Richtungsinformation. Ein solches Beobachtungsgerät kann beispielsweise als ein Monokular, Binokular bzw. Fernglas, Nachtsichtgerät, Teleskop, Periskop etc. mit einem vollständig optischen oder teilweise elektronischen Beobachtungsweg ausgeführt sein. Beispiele für solche Beobachtungsgeräte sind die kommerziell erhältlichen Geräte Vectronix Moskito, PLRF und JIM LR.

In der Praxis kommt es durch den Einfluss von statischen Magnetfeldern oder durch ferromagnetische Materialien im Gerät zu Messfehlern bei der Orientierungsmessung. Solche Störungen können die Bestimmung der Nord-Referenzierung verfälschen. Durch die Anwendung bekannter Kalibrations- bzw. Kalibrierungsmethoden (US6009629, US5117375, GB2128749, US6539639), insbesondere unter Anwendung bekannter Störungsmodelle wie IGRF oder WMM, werden solche Einflüsse reduziert.

Wenn ein DMC in ein Beobachtungsgerät eingebaut ist, wird eine Kalibrierung benötigt, um Einflüsse magnetischer Teile innerhalb des Geräts zu kompensieren. Diese magnetischen Teile sind insbesondere ferromagnetische Teile und elektronische Ausrüstung als Quelle von Magnetfeldern durch elektrische Ströme.

Eine geeignete Kompensation solcher Störeinflüsse ist beschrieben in der Veröffentlichung "A NON-LINEAR, TWO-STEP ESTIMATION ALGORITHM FOR CALIBRATING SOLID-STATE STRAPDOWN MAGNETOMETERS" von D. Gebre-Egziabher, G.H. Elkaim, J.D. Powell und B.W. Parkinson vom Department of Aeronautics and Astronautics at Stanford University, publiziert in Proceedings of the International Conference on Integrated Navigation System, St. Petersburg Russia, Mai 28-30, 2001, Seiten. 290-297. In dieser Veröffentlichung werden die Grundlagen für Kompass-Kalibrierung bzw. -Kompensation erklärt und ein Beispiel für eine entsprechende Lösungsmethode vorgestellt.

Die US 6,009,629 offenbart ein Verfahren zur Bestimmung des erdmagnetischen Feldes in Fällen von Störungen durch in das Gerät eingebautes oder daran angebrachtes magnetisches Material. Zu diesem Zweck wird ein auf der Ausrüstung angebrachter elektronischer Magnetkompass in N verschiedene räumliche Positionen gebracht, wobei Magnetfeld und Inklinationswinkel im Rahmen einer Kompensations- bzw. Kalibrierungsprozedur gemessen werden. Die dabei erfassten Daten ermöglichen unter Benutzung mathematischer Algorithmen die Bestimmung des tatsächlichen Erdmagnetfelds und die Entfernung von Störeinflüssen. Die US2009/0306892 offenbart ein handhaltbares Beobachtungsgerät mit einem Kompassmodul.

Für handgehaltene Geräte mit Kompass umfasst der Kalibrierungsvorgang typischerweise eine vorgeschriebene Bewegung des Gerätes, die vom Benutzer ausgeführt werden muss. Bei modernen Geräten wird dieses vorteilhaft von der Gerätesoftware im Rahmen einer Benutzerführung angeleitet, wobei die Bewegungen des Geräts nach Möglichkeit überwacht werden. Es gibt auch Störungskorrekturen, welche ohne definierte Kalibrierungsbewegung auskommen und innerhalb des normalen Betriebs parametriert werden können (siehe z. B. US 8,370,097). Solche Korrekturen verwenden reduzierte Modelle für die magnetischen Störungen. Die Bestimmung der Orientierung mit dem so kalibrierten Kompass ist damit jedoch entsprechend fehleranfälliger.

Elektronische Magnetkompasse sind beispielsweise verfügbar als vorgefertigte Module wie das Vectronix DMC-SX, welches bereits grundlegende Routinen und Algorithmen für die Ausführung einer solchen Kalibrierung / Kompensation in der Firmware bereitstellt. Diese digitalen Kompassmodule können in ein Beobachtungsgerät eingebaut werden, welches zusätzliche Funktionen, wie beispielsweise Tag- und Nachtsichtbeobachtung oder Laser-Entfernungsmessung bereitstellt.

Für eine funktionsfähige Kompensation ist es wünschenswert, dass bei der Kalibrierung ein vorgeschriebenes Muster von Ausrichtungen (Kalibrationsmuster) welches ausreichend Informationen für die Bestimmung der Kompensationsparameter ermöglicht, befolgt wird.

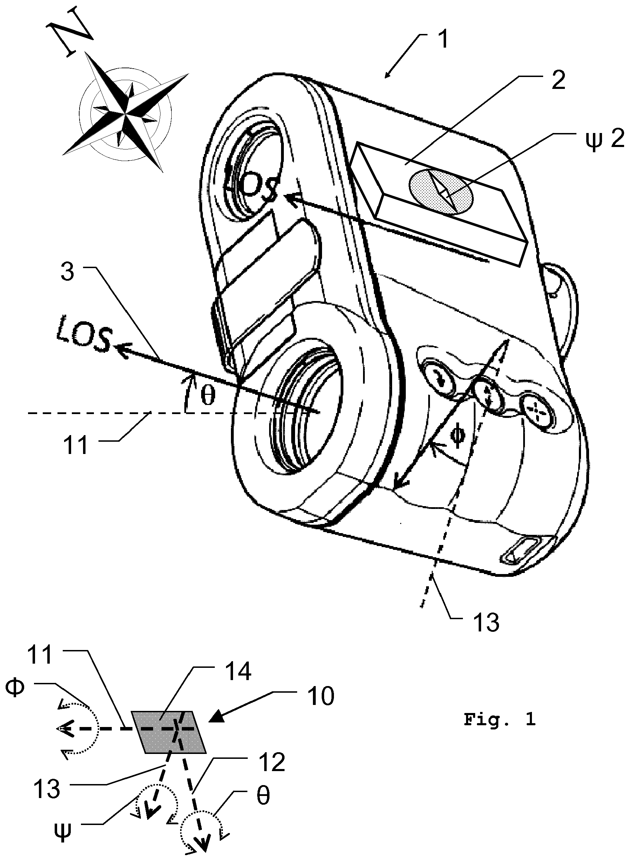

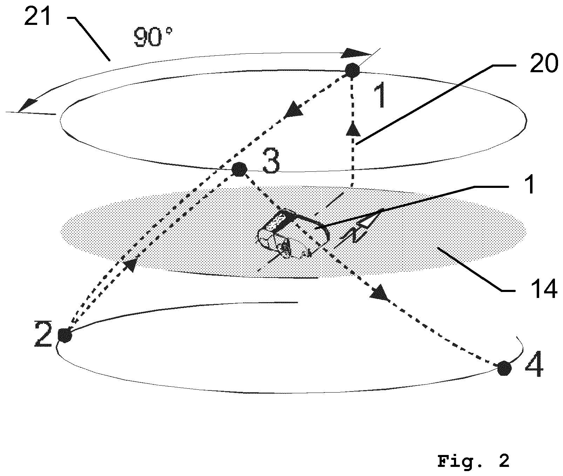

Da solche Kalibrationsmuster für einen unerfahrenen Benutzer relativ kompliziert sein können (siehe nachfolgend Fig. 1 und Fig. 2 mit den zugehörigen Figurenbeschreibungen), ist eine adäquate Benutzerführung vorteilhaft. Ein typischer Kalibrierungsvorgang dauert etwa eine Minute, Infolge des Einflusses von Bewegungen, insbesondere Schwenkbewegungen, auf die Messergebnisse, muss das Gerät während eines Messvorgangs ruhig gehalten werden. Zudem müssen die Messresultate zwecks Kompensation eines Handzitterns des Benutzers über einen gewissen Zeitraum (typischerweise 1 Sekunde) integriert werden.

Für die verschiedenen Ausrichtungen des Geräts innerhalb des Kalibrierungsvorgangs können grobe Schätzwerte eingesetzt werden, die nicht mit grosser Genauigkeit eingehalten werden müssen. Beispielsweise ist ein Genauigkeitsbereich von ±20° im Azimut und von ±10° in Elevation und Rollwinkel in der Regel ausreichend für die Erfassung verwertbarer Kompensationsparameter.

Die Einhaltung dieser Richtwerte ist typischerweise kein Problem hinsichtlich Elevation und Rollwinkel, da diese entsprechend der Ausrichtung des Geräts im Schwerefeld mit Hilfe von Beschleunigungsmessern mit hinreichender Genauigkeit bestimmt werden können. Jedoch kann die Messung hinsichtlich des Azimut trotz des grossen zugehörigen Toleranzbereichs zu ungenau sein, wenn starke magnetische Störungen vorliegen.

Der Parameterfit der Kalibrierung kann nur fehleroptimiert erfolgen, wenn das zugrunde liegende Gleichungssystem überdefiniert ist (mehr Gleichungen als unbekannte Parameter). Deshalb ist eine ausreichende Variation der Orientierung des Kompasses bei der Kalibrierung entscheidend und eine überwachende Benutzerführung notwendig, was wiederum die Kalibrierung verlangsamt (abhängig von der Kompliziertheit der Geometrie und der Anzahl von Messpunkten).

Vereinfachte Fehlermodelle für die Störunterdrückung können den Zeitbedarf für die Kalibrierung etwas reduzieren (weniger Parameter), aber diese Modelle können den Messfehler weniger gut reduzieren - die Messung wird dadurch fehleranfälliger.

Andere bekannte Kalibrations- bzw. Kompensationslösungen, wie sie zum Beispiel für elektronische Kompasse in mobilen Geräten wie einem Smartphone verwendet werden, ermöglichen nur eine grobe Kompensation nur einiger der potentiellen Störeinflüsse.

Beispielsweise reicht zur Kalibration ein Drehen des Geräts um seine horizontale Achse nicht aus, um alle Einflüsse zu kompensieren und eine gewünschte Genauigkeit von einigen Grad oder weniger zu erreichen, wie es auch in der US 6,009,929 erklärt ist. Des Weiteren sind komplizierte dreidimensionale Bewegungen schwer zu erklären und für einen unerfahrenen Benutzer schwer auszuführen. Der in der vorliegenden Anmeldung präsentierte hochgenaue Ansatz unterscheidet sich wesentlich von Ansätzen, mit denen nur eine teilweise Kompensation erreicht werden kann. Mit dem hier vorgelegten Ansatz sollen Genauigkeiten deutlich besser als 0.5° ermöglicht werden. Derartige Genauigkeiten sind weit besser als Anforderungen, wie sie beispielsweise an ein Fahrzeugnavigationssystem oder zur Bestimmung der Orientierung eines Mobiltelefons gestellt werden.

Nach dem Kalibrierungsvorgang kann das Gerät Orientierungsmessungen durchführen. Solange sich die magnetischen Eigenschaften des Gerätes nicht zu stark verändern, passt das Korrekturmodell, und die Messfehler werden auf akzeptable Werte reduziert.

Ein alternatives System, um Orientierungsänderungen und sogar Lageänderungen, d.h. Änderungen nicht nur der Ausrichtung, sondern auch des Orts zu bestimmen ist ein Videotrackingsystem. Dabei nimmt eine Kamera sequentiell Bilder der Umgebung auf. Eine Veränderung der Kameralage führt (bei geeigneter Umgebung der Kamera) zu einer Veränderung des aufgenommenen Bildinhaltes. Eine Verarbeitungseinheit berechnet aus der Veränderung im Bildinhalt die zugrunde liegende Lageänderung. Die US 7,002,551 beschreibt ein handgehaltenes Gerät mit Direktsicht, welches ein Videotrackingsystem für die Messung von Orientierungsänderungen verwendet. Ebenfalls beschrieben ist eine Kombination eines Inertialsensors ("inertial measurement unit", IMU) mit einem Videotrackingsystem. Hält der Benutzer das Gerät ruhig, wird die Orientierung mit dem Videotrackingsystem gemessen. Bei schneller Bewegung des Gerätes sowie bei wenig kontrastreicher Umgebung übernimmt die IMU die Orientierungsmessung. Ein Videotrackingsystem und ein Verfahren zur Kalibrierung von Orientierungssensoren eines handgehaltenen Geräts ist auch aus den Dokumenten EP2600109 und US2011/0275408 bekannt.

Die Messung bzw. Orientierungsbestimmung mit Hilfe eines Videotrackingsystems ist ohne Zuhilfenahme von Zusatzinformation nur relativer Natur (Bestimmung von Änderungen von Orientierung und/oder Lage). Eine Umrechnung in absolute Orientierungen eines Kartenkoordinatensystems setzt Zusatzinformationen voraus, wie beispielsweise GPS-Position oder Bilder von Objekten (Referenzpunkte) mit bekannten Kartenkoordinaten.

Zudem kann es in einer Umgebung mit geringem verwertbarem Kontrast, zum Beispiel bei Messungen in dichtem Nebel, zu Problemen kommen, weil sich der Bildinhalt dann auch bei einer Lageänderung nicht verändert.

Auch die Verwendung von kontrastunterstützenden Massnahmen, zum Beispiel die Kombination einer herkömmlichen Kamera mit einer Nachtsichtkamera oder einer Thermographie- oder Infrarotkamera oder eine Multispektralaufnahme sowie die aktive Beleuchtung der Umgebung im Kamergesichtsfeld, können das Problem nicht in jedem Fall beseitigen.

Zudem ist die Messung von Lageänderungen mit einem Videotrackingsystem algorithmisch komplex und kann bei längeren Messzeiten speziell für handgehaltene Geräte ein Problem durch erhöhten Stromverbrauch und Wärmeproduktion darstellen.

Demgegenüber kann ein Magnetkompass direkt die magnetische Nordrichtung bestimmen, wobei die Messung schnell und einfach erfolgen kann und unabhängig von der Beleuchtungssituation ist.

Ein weiteres System, welches Orientierungs- und Lageänderungen erfassbar macht, ist eine IMU (Inertial Measurement Unit, Inertialsensor). Dieses ist eine Kombination aus Winkelgeschwindigkeits- und Beschleunigungssensoren mit einer Verarbeitungseinheit. Durch zeitliche Integration der Bewegungsgleichungen bestimmt die Verarbeitungseinheit so beliebige Lageänderungen. Die Messung ist wiederum nur relativer Natur; eine Bestimmung der absoluten Lage in einem Kartenkoordinatensystem setzt ähnlich wie beim Video-Tracking-System Zusatzinformation voraus.

Problematisch bei der IMU ist, dass sich Messfehler durch die zeitliche Integration akkumulieren und so mit der Dauer der Messung stark zunehmen (Drift). Demgegenüber liefert ein Magnetkompass für beliebig lange Messdauer immer die gleiche Qualität der Messung (ohne Drift).

Von allen Systemen die Orientierung zu messen, hat somit der digitale Magnetkompass entscheidende Vorteile.

Zusammenfassend ist festzustellen: Die Kompasskalibrierung ist zeitaufwändig und anfällig für Benutzerfehler. Ein verbessertes System würde den Zeitbedarf für die Kalibrierung reduzieren und den Bewegungsablauf bei der Kalibrierung vereinfachen.

Nach erfolgter Kalibrierung des Kompasses kann eine Veränderung in der Umgebung (z.B. Hinzunehmen einer neuen Batterie die ferromagnetische Teile enthält) wieder zu fehlerhaften Messungen führen.

Ein verbessertes System würde Messungen des Magnetkompasses durch andere Verfahren kontrollieren, ohne die Messgenauigkeit des Kompasses zu reduzieren.

Es ist daher eine Aufgabe der vorliegenden Erfindung, eine verbesserte Kalibrations- bzw. Kompensationsroutine für ein Beobachtungsgerät mit einem elektronischen Magnetkompass, welche auch bei schwierigen Umgebungsbedingungen ausführbar ist, bereit zu stellen.

Es ist eine besondere Aufgabe der Erfindung, ein handhaltbares Beobachtungsgerät mit einem digitalen Magnetkompass-Modul bereitzustellen mit einer Kalibrations- bzw. Kompensationsroutine unter Verwendung von Messungen eines Videotrackers, welche robust gegen magnetische Störungen in der Umgebung ist, wobei die Messgenauigkeit der kompensierten Messung durch Auswertungen eines Videotrackers kontrolliert werden kann

Aufgabe der Erfindung ist ausserdem die Bereitstellung eines Verfahrens für die Bestimmung einer verlässlichen Information insbesondere bezüglich des Azimut-Winkels, verbunden mit einer Benutzerführung für ein Kalibrationsmuster des digitalen Magnetkompasses (DMC), auch im Falle schwerer magnetischer Störungen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Mängel der derzeitig vorhandenen digitalen magnetischen Kompass-Technologie (DMC) können durch Kombination mit einem Videotrackingsystem auf mehrfache Art entscheidend verbessert werden.

Zum einen kann das Videotrackingsystem für die Kompasskalibrierung eine Messung der Orientierungsänderung im Azimutwinkel leisten. So wird die Kompasskalibrierung unabhängig von schon vorhandenen (evtl. fehlerhaften) Kompensationsparametern. Wird bei der Kompasskalibrierung mit dem Videotrackingsystem die Orientierungsvariation gemessen, so kann diese Zusatzinformation für einen verbesserten Parameterfit der Kompasskalibrierung verwendet werden, was zu einer Verringerung der Anzahl Messpunkte und einer Vereinfachung der Messgeometrie führt; eine kürzere, vereinfachte Bewegung ist ausreichend.

Zum anderen ist nun die Verwendung von Neigungsinformation auch während der Bewegung möglich, da die Orientierungsmessung mit dem Videotrackingsystem die Neigungsmessung unterstützen kann.

Die Neigungsmessung erfolgt zu Beginn der Kalibrierungsmessung im Stillstand durch die Neigungssensorik des DMC (Beschleunigungssensoren). Danach erfolgte Änderungen der Orientierung werden vom Videotrackingsystem gemessen. So kann auf die Neigungssensorik des DMC während der weiteren Kalibrierungsmessung verzichtet werden, und Messpausen während der Bewegung sind nicht mehr notwendig.

Dieses reduziert den Zeitbedarf für die Kompasskalibrierung, vereinfacht die Benutzerführung und verhindert eine fehlerhafte Kalibrierung durch den Benutzer.

Andererseits kann bei guten Bedingungen, d.h. bei gut in der Umgebung erkennbaren Objekten, die Orientierungsmessung des Videotrackingsystems verwendet werden, um die Orientierungsänderungen des Kompasses zu überprüfen. Bei Fehlmessungen kann die Messung als ungültig markiert und/oder eine Rekalibrierung erzwungen werden.

Gegenstand der Erfindung ist somit ein handhaltbares Beobachtungsgerät mit einem digitalen Magnetkompass zur Messung einer Magnetfeld-Richtung, einem Gravitationssensor zur Messung der Schwerefeld-Richtung und einer Steuer- und Auswerteeinheit konfiguriert zur Bestimmung einer aussenreferenzierten Orientierung des Beobachtungsgeräts abhängig von Magnetfeld-Richtung und Schwerefeld-Richtung unter Anwendung einer algorithmischen Störunterdrückung, für die - sich auf eine Kompensation von lokalen Magnetfeld-Störeinflüssen beziehende - Kompensationsparameter gespeichert sind.

Erfindungsgemäss weist das Beobachtungsgerät ferner ein Videotrackingsystem zur Aufnahme einer Bildsequenz und zur anhand der Bildsequenz erfolgenden Ableitung von Orientierungsänderungen des Beobachtungsgeräts auf. Die Steuer- und Auswerteeinheit ist dabei derart konfiguriert, dass die Bestimmung der aussenreferenzierten Orientierung (ggf. ferner) von durch das Videotrackingsystem abgeleiteten Orientierungsänderungen beeinflusst ist, indem die gespeicherten Kalibrierparameter (ggf. unter anderem) auf durch das Videotrackingsystem abgeleiteten Orientierungsänderungen gründen. Die Vorteile der erfindungsgemässen Integration eines Videotrackingsystems in das erfindungsgemässe Beobachtungsgerät sind vorangehend bereits ausführlich beschrieben worden. Insbesondere kann die Einbeziehung von mit dem Videotrackingsystem gemessener Orientierungsinformation für einen verbesserten Parameterfit verwendet werden, was eine Verringerung der Anzahl der Messpunkte und eine Vereinfachung der Messgeometrie ermöglicht.

Bevorzugt wird durch die Auswerte- und Steuereinheit eine Kalibrierfunktionalität bereitgestellt, welche dazu ausgestaltet ist, um benutzerunterstützt im Feld eine

Kalibrierung der Störunterdrückung durchzuführen, wobei für die Kalibrierung ein Ablauf von mehreren Kalibriermessungen definiert ist, insbesondere mindestens fünf, für welche das Beobachtungsgerät durch einen Benutzer in mehrere unterschiedliche Drehlagen zu bringen ist, und wobei im Rahmen der Kalibrierfunktionalität automatisch Kalibriermessungsgrössen erfasst werden. Diese Kalibriermessungen umfassen zumindest für jede der Kalibriermessungen eine durch den Magnetkompass gemessene Magnetfeld-Richtung (und optional zusätzlich eine durch den Gravitationssensor gemessene Schwerefeld-Richtung), und anhand dieser Kalibriermessungsgrössen werden die gespeicherten Kalibrierparameter überprüft und insbesondere ggf. aktualisiert.

Die Steuer- und Auswerteeinheit kann dabei derart konfiguriert sein, dass im Rahmen der Kalibrierfunktionalität als die zum Überprüfen und ggf. Updaten der Kalibrierparameter herangezogenen Kalibriermessungsgrössen ferner automatisch Unterschiede zwischen den in den jeweiligen Kalibriermessungen eingenommenen Drehlagen des Beobachtungsgeräts untereinander erfasst werden, welche anhand von durch das Videotrackingsystem abgeleiteten Orientierungsänderungen berechnet werden.

Insbesondere ist dabei die Steuer- und Auswerteeinheit derart konfiguriert, dass die als Teil der

Kalibriermessungsgrössen erfassten Unterschiede der eingenommenen Drehlagen untereinander, welche anhand von durch das Videotrackingsystem abgeleiteten Orientierungsänderungen berechnet werden, in zumindest einem rotatorischen Freiheitsgrad, nämlich bezüglich einer azimutalen Komponente, erfasst werden. Vorzugsweise erfolgt dieses in drei rotatorischen Freiheitsgraden, d.h. bezüglich einer azimutalen, einer elevativen und einer rollwinkligen Komponente.

Durch Einbeziehung einer vom Videotrackingsystem gemessenen Orientierungsänderung im Azimutwinkel wird die Kompasskalibrierung vorteilhaft unabhängig von schon vorhandenen (evtl. fehlerhaften) Kalibrierungsdaten.

Gemäss einer Ausführungsform ist die Steuer- und Auswerteeinheit so konfiguriert, dass im Rahmen der Kalibrierfunktionalität zur benutzerseitigen Bringung des Beobachtungsgeräts in die mehreren unterschiedlichen Drehlagen automatisch durch das Videotrackingsystem Orientierungsänderungen abgeleitet werden, von denen eine Benutzerführungsinformation hinsichtlich einer zu erfolgenden Drehlagenänderung abgeleitet wird, um dadurch eine angestrebte Drehlage zu erreichen.

Gemäss einer Ausführungsform werden die Orientierungsänderungen des Beobachtungsgeräts durch das Videotrackingsystem in zumindest einem rotatorischen Freiheitsgrad, nämlich bezüglich einer azimutalen Komponente, abgeleitet. Vorzugsweise erfolgt dieses wiederum in drei rotatorischen Freiheitsgraden, d.h. bezüglich einer azimutalen, einer elevativen und einer rollwinkligen Komponente.

Gemäss einer weiteren Ausführungsform ist das Videotrackingsystem ferner konfiguriert zur anhand der Bildsequenz erfolgenden Ableitung von translatorischen Positionsänderungen des Beobachtungsgeräts, wobei die Bestimmung der aussenreferenzierten Orientierung ferner auch von durch das Videotrackingsystem abgeleiteten translatorischen Positionsänderungen beeinflusst ist. Insbesondere gründen dabei die gespeicherten Kompensationsparameter unter anderem auf durch das Videotrackingsystem abgeleiteten translatorischen Positionsänderungen. Vorzugsweise werden dabei die abgeleiteten translatorischen Positionsänderungen zur Kompensation von im Rahmen des Bringens des Beobachtungsgeräts in die mehreren unterschiedlichen Drehlagen verursachten translatorischen Ortsänderungen des Beobachtungsgeräts herangezogen.

Gemäss einer weiteren Ausführungsform ist die Steuer- und Auswerteeinheit konfiguriert zur Bestimmung einer Serie von aussenreferenzierten Orientierungen für eine Serie von eingenommenen Drehlagen des Beobachtungsgeräts. Dabei werden die jeweiligen aussenreferenzierten Orientierungen bestimmt in Abhängigkeit der gemessenen Magnetfeld-Richtung, der gemessenen Schwerefeld-Richtung und der Unterschiede zwischen den eingenommenen Drehlagen des Beobachtungsgeräts, welche durch Videotrackingsystem berechnet werden. Dabei wird die algorithmische Störunterdrückung angewandt.

Gemäss einer Ausführungsform ist die Steuer- und Auswerteeinheit derart konfiguriert, dass im Rahmen einer Bestimmung einer Serie von aussenreferenzierten Orientierungen für eine Serie von eingenommenen Drehlagen des Beobachtungsgeräts die gespeicherten Kompensationsparameter automatisch überprüft werden. Dabei werden Unterschiede zwischen den jeweils bestimmten aussenreferenzierten Orientierungen verglichen mit Unterschieden zwischen den im Rahmen der Serie jeweils eingenommenen Drehlagen des Beobachtungsgeräts untereinander, welche anhand von durch das Videotrackingsystem abgeleiteten Orientierungsänderungen berechnet werden. Insbesondere werden dabei für den Fall, dass eine Abweichung der Unterschiede zwischen den jeweils bestimmten aussenreferenzierten Orientierungen von den - anhand von durch das Videotrackingsystem abgeleiteten Orientierungsänderungen - berechneten Unterschieden ein definiertes zugelassenes Abweichungs-Höchstmass übersteigt, automatisch über am Beobachtungsgerät vorgesehene Ausgabemittel eine neuerliche Kalibrierung empfehlende oder anstossende Benutzerinformation ausgegeben.

Gemäss einer weiteren Ausführungsform stellt die Auswerte- und Steuereinheit eine Referenzier-Funktionalität bereit, welche dazu ausgestaltet ist, um benutzerunterstützt im Feld eine Magnetkompass-unabhängige Aussenreferenzierung bezüglich einer Orientierung des Beobachtungsgeräts herzustellen. Dafür ist ein Ablauf von mindestens einer Anzielung von einem bekannten Ziel, über das die Aussenreferenzierung ermöglichende Information gespeichert oder per Benutzereingabe vorliegt, definiert, für welche Anzielung das Beobachtungsgerät durch einen Benutzer in eine das mindestens eine Ziel anzielende Referenzier-Drehlage zu bringen ist. In dieser Referenzier-Drehlage sowie im Fortgang wird automatisch fortlaufend durch das Videotrackingsystem eine Bildsequenz aufgenommen. Anhand dessen werden Orientierungsänderungen des Beobachtungsgeräts abgeleitet, sodass im Fortgang automatisch aussenreferenzierte Orientierungen bestimmbar sind. Dieses erfolgt insbesondere, im Speziellen auch ausschliesslich, abhängig von Unterschieden zwischen der Referenzier-Drehlage und jeweiligen im Fortgang eingenommenen Drehlagen des Beobachtungsgeräts untereinander. Dabei werden diese Unterschiede anhand von durch das Videotrackingsystem abgeleiteten Orientierungsänderungen berechnet. Insbesondere sind die automatisch aussenreferenzierten Orientierungen bestimmbar unter Einbeziehung der die Aussenreferenzierung ermöglichenden vorliegenden Information über das mindestens eine bekannte Ziel.

Dabei ist vorteilhaft die Steuer- und Auswerteeinheit derart konfiguriert, dass im Rahmen einer Bestimmung einer aussenreferenzierten Orientierung für eine eingenommene Drehlage des Beobachtungsgeräts automatisch eine Überprüfung insbesondere hinsichtlich Beeinflussung durch regionale Magnetfeld-Störungen durchführbar ist, anhand eines Vergleichs der bestimmten aussenreferenzierten Orientierung mit einer separat im Rahmen der Referenzier-Funktionalität bestimmten aussenreferenzierten Orientierung. Insbesondere erfolgt anhand dessen automatisch eine Kompensation von regionalen Magnetfeld-Störeinflüssen.

Gemäss einer Ausführungsform ist der digitale Magnetkompass mit Neigungssensoren ausgestattet, wobei Messungen der Neigungssensoren von Orientierungsänderungsmessungen durch das Videotrackingsystem unterstützbar sind, und/oder die Auswerte- und Steuereinheit derart konfiguriert, dass bei der Bestimmung der aussenreferenzierten Orientierung des Beobachtungsgeräts Messwerte einer Inertialmesseinheit und/oder Navigationsdaten, insbesondere GPS-Daten, einbeziehbar sind.

Die Neigungsmessung erfolgt typischerweise zu Beginn der Kalibrierungsmessung im Stillstand durch die Neigungssensorik des DMC (Beschleunigungssensoren). Danach erfolgte Änderungen der Orientierung werden vom Videotrackingsystem gemessen. So kann vorteilhaft auf die Neigungssensorik des DMC während der weiteren Kalibrierungsmessung verzichtet werden, und die Bewegung kann schneller und weniger eingeschränkt erfolgen. Insbesondere sind keine Messpausen (oder Stopps) während der Bewegung notwendig. Dieses reduziert den Zeitbedarf für die Kompasskalibrierung und vereinfacht die Benutzerführung.

Gemäss einer Ausführungsform weist das Beobachtungsgerät mindestens einen durchgehenden Beobachtungsstrahlengang mit einem Eingangsobjektiv und einem Ausgangsokular für einen Beobachter auf.

Gemäss einer weiteren Ausführungsform weist das Videotrackingsystem ein Objektiv auf, mit dem ein Teil der erfassten Umgebung auf einen Kamerasensor abbildbar ist. Dabei ist insbesondere das Objektiv als ein zusammengesetztes Objektiv mit einem vorderen Objektivteil und einem hinteren Objektivteil aufgebaut, insbesondere wobei das vordere Objektivteil zudem als ein Objektiv für ein Teleskop zur visuellen Beobachtung verwendbar ist.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

Fig. 1   beispielhaft ein handhaltbares Beobachtungsgerät gemäss dem Stand der Technik mit einem digitalen Magnetkompass;

Fig. 2   ein Beispiel einer möglichen Ausführungsform eines Ausrichtungsmusters für das handhaltbare Beobachtungsgerät, welches für eine Kalibrierung bzw. Kompensation von Störeinflüssen und eine Benutzerführung erfindungsgemäss einsetzbar ist;

Fig. 3   ein erfindungsgemässes handhaltbares Beobachtungsgerät mit einer ersten Ausführungsform eines Videotrackingsystems;

Fig. 4   Details des Videotrackingsystems von Fig. 3; und

Fig. 5    ein weiteres erfindungsgemässes handhaltbares Beobachtungsgerät mit einer zweiten Ausführungsform eines Videotrackingsystems.

Figur 1 zeigt ein Beispiel einer Ausführungsform eines handhaltbaren Beobachtungsgeräts 1 gemäss dem Stand der Technik, mit einem elektronischen Kompass, der bereitgestellt ist als ein digitales Magnetkompass-Modul 2. Das Beobachtungsgerät 1 weist eine Visierlinie 3 (LOS, "line of sight") als eine optische Achse für eine Beobachtung auf, welche beispielsweise mit einer Strichplatte, einem Fadenkreuz oder einer ähnlichen Zielmarkierung, welche eingesetzt werden kann zum Visieren eines bestimmten Ziels, gekennzeichnet ist.

Die LOS 3 kann auch verwendet werden bezüglich verschiedener Messungsfunktionalitäten des Geräts, wie beispielsweise bezüglich Anzielung, Distanzmessung oder Koordinatenbestimmung, Bestimmung von Elevation, Azimut und Schräglage (Rollwinkel).

Dafür kann ein Koordinatensystem 10 definiert werden, welches in Figur 1 zwecks Übersichtlichkeit separat vom Beobachtungsgerät 1 dargestellt ist. Das Koordinatensystem 10 umfasst eine Rollachse 11, welche vorzugsweise übereinstimmt mit oder parallel zu der Richtung der Visierlinie 3 ist, wenn diese in der Horizontalebene 14 angeordnet ist, um welche Rollachse 11 ein Rollwinkel $\Phi$ definiert ist. Näherungsweise senkrecht dazu befindet sich eine Elevations-, Höhen- oder Anstellachse 12, um welche ein Elevationswinkel $\theta$ zwischen der Horizontalebene 14 und der Visierlinie LOS 3 definiert ist. Die dritte Achse, näherungsweise senkrecht zu den zwei vorgenannten Achsen, ist die Azimut- oder Gierachse 13, welche zum Gravitationszentrum zeigt und um die ein Azimutwinkel $\psi$ als eine Drehung in der Horizontalebene definiert ist, welche mittels des Kompasses 2 als Nordrichtung anzuzeigen ist.

Für eine Kompensation bzw. Kalibrierung oder Korrektur der Messwerte von Magnetfeldsensoren des digitalen magnetischen Kompasses (DMC) 2, werden Messungen bei einer Vielzahl von Orientierungen des Geräts vorgenommen, wie beispielsweise in der US 6,009,629 oder unter Bezug auf die Figur 2 beschrieben. Obwohl die Gewinnung von Kompensationsparametern nicht beschränkt ist auf einen streng definierten Satz von Orientierungen, gibt es bevorzugte Muster, welche einen wohlbestimmten Satz von Messdaten für eine hochgenaue Kalibrierung bereit stellen.

Figur 2 zeigt ein einfaches Beispiel eines Kalibrierungsmusters mit N = 4 anzuzielenden gewünschten Richtungen, welche von 1 bis 4 nummeriert und durch den gestrichelten Weg 20 verbunden sind. Im Azimut werden drei 90°-Drehungen 21 durchgeführt, jede verbunden mit einer Änderung der Elevation auf einen gewünschten Winkel oberhalb oder unterhalb der Horizontalebene 14. Mithilfe dieses Musters ist es möglich, eine magnetische Grob-Kalibrierung bzw. Grob-Kompensation zu erzielen.

Abhängig von der Art des Beobachtungsgeräts und auch abhängig davon, ob das Gerät zum Beispiel mit der Hand gehalten wird oder frei bewegbar oder irgendwo montiert ist, kann das gewünschte Muster unterschiedlich sein.

Da die Kalibrierungs- bzw. Kompensationsberechnungen auch die Bestimmung eines Gütefaktors umfassen können, können mögliche Probleme auch am Ende des Kalibrierungs- bzw. Kompensationsverfahrens bestimmt und einem Benutzer angezeigt werden, worauf eine andere Kalibrierungs- bzw. Kompensationsroutine mit einem anderen Muster oder einer anderen Startposition ausgeführt werden kann.

Zum aufeinander folgenden Ausrichten des Geräts auf die N Orientierungen eines Satzes weist das Beobachtungsgerät 1 eine Benutzerführung auf, um es einem Benutzer zu erleichtern, das Gerät innerhalb eines vernünftigen Bereichs um diese Orientierungen auszurichten. Hinsichtlich der Ausrichtung und Einstellung bezüglich der Rollachse ist die Führung in der Regel kein Problem; diese Einstellungen können durch die Neigungssensoren des DMC mit mehr als erforderlicher Genauigkeit von einem oder wenigen Grad bestimmt werden.

Hinsichtlich des Azimut sind jedoch die einzigen verfügbaren Messwerte die Daten $\psi_2$ von dem zu kalibrierenden Kompass 2 selbst. Dabei muss zunächst davon ausgegangen werden, dass die vorangehenden Kompensationsparamter für den Kompass ausreichend genau sind, so dass zumindest eine ungefähre Azimutrichtung $\psi_2$ innerhalb akzeptabler Grenzen geliefert werden kann, d.h. innerhalb eines Fehlerbreichs $\pm 20°$ (entsprechend dem obigen Beispiel).

Jedoch kann in vielen Fällen nicht garantiert werden, dass die Magnetfeldsensoren immer noch innerhalb des Toleranzbereichs für das Kalibrierungmuster brauchbare Messwerte liefern. Eine solche Situation ist in der Regel nicht offensichtlich, wenn die Kalibrierungsroutine gestartet wird, und wird möglicherweise nicht einmal wärend der Kalibrierung offensichtlich.

Entsprechend kann die Kalibrierungsführung im Stand der Technik nicht ausgeführt werden, wenn die magnetische Störung zu gross ist, was ein Problem bei modernen Beobachtungsgeräten 1 ist, insbesondere da die Geräte 1 kleiner werden ($r^3$-Regel der Abschwächung des Magnetfelds) und mehr elektronische Ausrüstung umfassen, verbunden mit elektrischen Strömen, die zu magnetischen Feldern führen. Beispielsweise kann ein einfacher Batterieaustausch eine Neukalibrierung notwendig machen. Die vorliegende Erfindung überwindet dieses Problem, welches schlimmstenfalls die ganze Kompass-Funktionalität unbrauchbar machen kann.

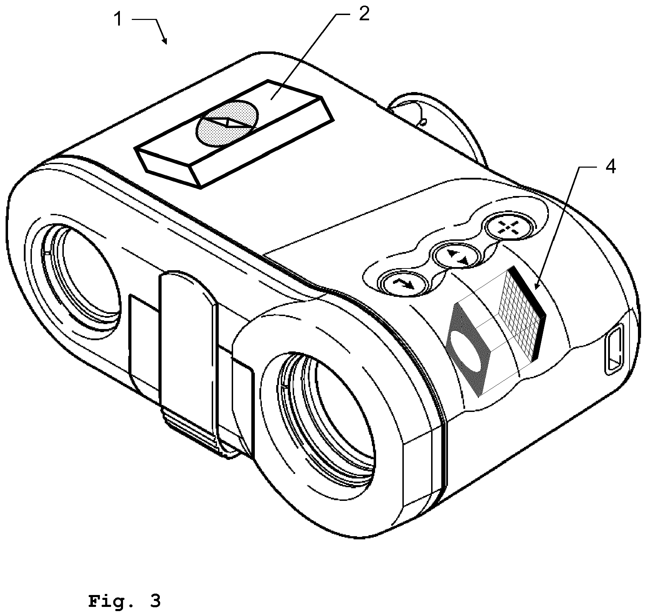

Figur 3 zeigt ein Beispiel für den Aufbau eines erfindungsgemässen Beobachtungsgeräts 1 (am Beispiel eines Fernglases mit integrierter Kompassfunktion). Im Beobachtungsgerät sind ein digitaler Magnetkompass 2 und ein Videotrackingsystem 4 in starrer Verbindung untergebracht. Der digitale Magnetkompass 2 dient dazu, die Orientierung des Geräts 1 gegenüber der Nordrichtung und der Gravitationsrichtung zu messen. Das Videotrackingsystem 4 überwacht und/oder verringert die dabei auftretenden Messfehler.

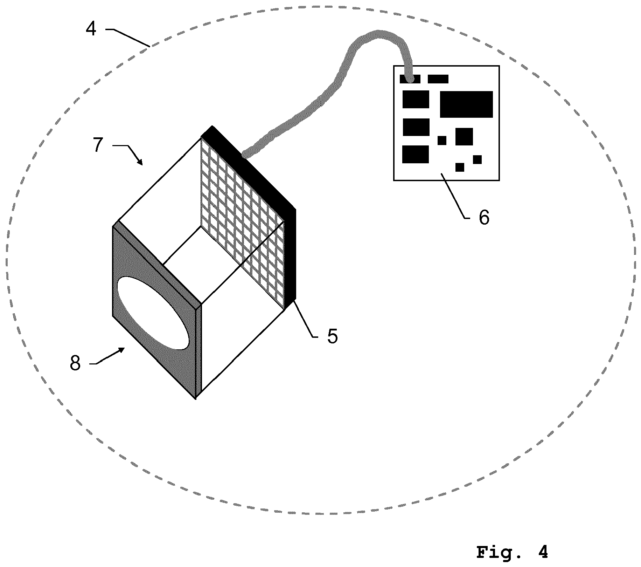

Figur 4 illustriert Details des Videotrackingsystems 4. Dieses umfasst ein Objektiv 8, welches einen Teil der Umgebung auf einen Kamerasensor 5 abbildet. Beispiele für solche Kamerasensoren sind handelsübliche CCD oder CMOS Sensoren. Das Videotrackingsystem 4 ist so in das Beobachtungsgerät 1 integriert, dass eine Abbildung eines Teils der Umgebung des Gerätes 1 auf den Kamerasensor 5 erfolgt. Eine elektronische Steuer- und Auswerteeinheit 6 versetzt den Kamerasensor 5 in die Möglichkeit, Bilder dieser Umgebung aufzuzeichnen und diese zur Steuer- und Auswerteeinheit 6 zu schicken. Der Kamerasensor 5 zusammen mit dem Objektiv 8 wird im Weiteren als Kamera 7 bezeichnet. Die Mitte der Eintrittspupille des Objektivs 8 entspricht in guter Näherung dem für die Berechnungen der Lageveränderung wesentlichen Kamerazentrum. Die Steuer- und Auswerteeinheit 6 verwendet die von der Kamera 7 sequentiell aufgezeichneten Bilder, um die Rotation der zugehörigen Kameraorientierungen zu berechnen.

Erfolgt zwischen zwei Bildaufnahmen (beispielsweise einem Bild j und einem Bild j+1) eine reine Rotation der Kamera 7 um das Kamerazentrum, so kann diese Rotation direkt gemessen werden, sofern in beiden Bildern noch gemeinsame Objekte abgebildet werden (siehe z. B. "Multiple View Geometry in Computer Vision", Second Edition. Richard Hartley and Andrew Zisserman, Cambridge University Press, März 2004). In einer zugehörigen mathematischen Darstellung der Rotationsbewegungen ergibt sich eine Matrix $R_{j,j+1}$ für die Einzelrotationen der j. Kameraorientierung zur Kameraorientierung j+1 des nächsten Bildes. Für längere Messungen in grösseren Winkelbereichen können die Einzelrotationen auf geeignete Weise zu einer Gesamtrotation $R_{1,j}$ zusammengefasst werden (Rotation der ersten Kameraorientierung zur Kameraorientierung des j-ten Bildes).

Für die Messung einer Translation des Kamerazentrums bei einer allgemeinen Lageänderung ist aus Genauigkeitsgründen die Verwendung einer Kamera 7 mit grossem Gesichtsfeldwinkel und/oder ein entsprechendes Mehrkamerasystem und/oder die Verwendung von Zusatzinformation (zum Beispiel GPS-Information) notwendig. Abhängig von der geforderten Messgenauigkeit für die Messung der Orientierung muss für zu grosse Translationsstrecken die Änderung des Bildinhalts durch die Translation berücksichtigt und die Messung der Rotation entsprechend korrigiert werden.

Die Kamera kann auch als Kombination einer Infrarot-Optik (NIR, MIR, FIR, thermisches Infrarot) mit einem dazu passenden Infrarot-Sensor ausgeführt sein. Dieses ermöglicht ein Messen auch bei Dunkelheit.

Das Videotrackingsystem 4 kann auch aus mehreren und verschiedenen Kameras aufgebaut sein, insbesondere zur Stabilisierung der Messung durch ein vergrössertes Gesichtsfeld aller Teilkameras oder durch Messung mit Abbildung bei verschiedenen Wellenlängen. Ebenfalls kann das Objektiv 8 als Teil eines optischen Systems ausgebildet sein, so dass Teile von Objektivkomponenten auch für andere Funktionen als das Video-Tracking verwendet werden.

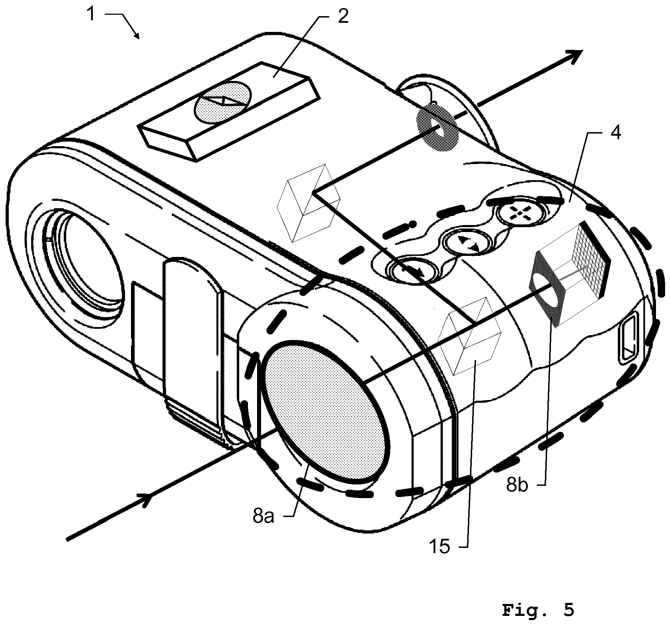

Ein Beispiel dafür zeigt Figur 5. Das Videotrackingsystem 4 weist hier ein zusammengesetztes Objektiv auf, welches ein vorderes Objektivteil 8a und ein hinteres Objektivteil 8b umfasst. Das vordere Objektivteil 8a wird zudem als Objektiv für ein Teleskop zur visuellen Beobachtung verwendet. Die Trennung der beiden Strahlengänge erfolgt hier beispielhaft über einen Strahlteilerwürfel 15.

In starrer Verbindung zum Videotrackingsystem 4 befindet sich der digitale Magnetkompass 2. Dieser umfasst beispielsweise drei Magnetfeldsensoren und einen Neigungssensor (nicht dargestellt). Der Neigungssensor kann wiederum aufgebaut sein aus zwei oder drei Beschleunigungssensoren. Eine Steuer- und Auswerteeinheit 6 berechnet aus den Messungen der Neigungsmessung und der Magnetfeldmessung die Orientierung bezüglich magnetischer Nordrichtung und der Richtung des Schwerefeldes. Optional kann eine zusätzliche Verarbeitung die Richtung auf die geographische Nordrichtung korrigieren oder beliebige Transformationen in andere Koordinatensysteme durchführen.

Die Messung des Erdmagnetfelds kann leicht gestört werden, unter anderem durch magnetische oder magnetisierbare Komponenten des Beobachtungsgeräts. Um dem entgegenzuwirken, wird bei der Verarbeitung der Sensordaten eine algorithmische Störunterdrückung verwendet, welche die Auswirkung solcher Störungen auf die Messwerte der Orientierungsbestimmung minimiert.

Im Folgenden wird die vorteilhafte Verwendung von Orientierungsmessungen eines Videotrackingsystems 4 zur Verbesserung der Kompassmessung exemplarisch an einem speziellen Modell zur Störunterdrückung dargestellt. Dieses ist nur ein Beispiel für viele Möglichkeiten solcher Störunterdrückung.

Beim Kalibrierungsvorgang werden N Einzelmessungen bei verschiedenen Orientierungen des Gerätes ausgeführt.

Jede der Einzelmessungen (j=1..N) enthält jeweils die Messung eines Magnetfeldsensors ($u_j$) sowie den vom Neigungssensor gemessenen Vektor des Schwerefeldes ($g_j$)

Die zu kalibrierende Störungsunterdrückung stellt einen umkehrbaren Zusammenhang zwischen dem Erdmagnetfeldvektor $h_j$ und dem gemessenen Magnetfeld ($u_j$) her:

$$\vec{u}_j = \vec{u}_0 + \overline{\overline{M}} \cdot \vec{h}_j \qquad (1)$$

Die zu ermittelnden Kompensationsparameter sind die Komponenten von $u_0$ und M.

Sind bei der Kalibrierung die Inklination b (Winkel zwischen Ausrichtung des Magnetfelds und Horizontalebene) sowie die Azimutwinkel $a_j$ jeder Einzelmessung bekannt, so kann mit dem Zusammenhang

$$\vec{h}_j = \vec{g}_j \sin(b) + \vec{n}_j \cos(b) \qquad (2)$$

unter Verwendung des in die Horizontebene projizierten Magnetfeldvektors $n_j$

$$\vec{n}_j = \vec{e}_j \sin(a_j) + \vec{f}_j \cos(a_j) \qquad (3)$$

und der beiden Orthogonalkomponenten der Horizontebene, $e_j$ (Zielachsrichtung) und $f_j$, zu jeder Messung $(u_j, g_j)$ das Erdmagnetfeld $h_j$ berechnet werden.

Dieses liefert, bei geeigneter Wahl der Messpunkte, 3N unabhängige Gleichungen für die Bestimmung der Komponenten der Gleichung (1) als Grundlage eines Ausgleichsproblems zur Berechnung der Kompensationsparameter $u_0$ und M sowie des Parameters b (zusammen 13 Parameter). Für ein überbestimmtes Gleichungssystem sind wenigstens 5 Einzelmessungen notwendig.

In praktischen Anwendungen sind allerdings bei der Kalibrierung selten die exakten Azimutwinkel $a_j$ bekannt. In diesem Fall ist entweder die Verwendung eines reduzierten Modells zur Störunterdrückung möglich (dieses aber mit entsprechend negativer Auswirkung auf die Messfehler), oder die unbekannten Azimutwinkel werden als Teil eines komplizierteren Ausgleichsproblems mitberechnet.

Letzteres erfordert allerdings mehr Einzelmessungen, da zusätzlich zu den 13 Kompensationsparametern auch noch die N verschiedenen Azimutwinkel $a_j$ berechnet werden müssen. Für ein überbestimmtes Gleichungssystem sind so mindestens 7 Einzelmessungen (in komplizierter Geometrie) notwendig.

Mit einem Videotrackingsystem lassen sich, wie oben dargestellt, Rotations- und/oder Lageänderungen hochgenau messen. Dabei wird die Rotation um das Kamerazentrum gemessen. Das Zentrum der Rotation des Magnetkompasses 2 ist in der Regel davon verschieden und liegt im Inneren des DMC 2. Bei der Rotation des Gerätes 1 kommt es aufgrund der Abweichung der Rotationszentren zu einer Translation mindestens eines Rotationszentrums. Durch die geringen Abstände innerhalb des Orientierungsgerätes 1 bleibt diese Translation aber vernachlässigbar klein. Somit sind die gemessenen Azimutwinkel direkt vergleichbar.

Der Azimutwinkel in Gleichung (3) lässt sich durch den ersten Azimutwinkel $a_1$ und die Abweichungen dazu $da_j = a_j - a_1$ formulieren:

$$\vec{n}_j = \vec{e}_j \left( \sin(a_1)\cos(da_j) + \cos(a_1)\sin(da_j) \right) + \vec{f}_j \left( \cos(a_1)\cos(da_j) - \sin(a_1)\sin(da_j) \right)$$

Zu den 13 Komponenten der Kompensationsparameter wird nur noch der erste Azimutwinkel $a_1$ berechnet, alle Abweichungen $da_j$ vom ersten Azimut werden vom Videotrackingsystem gemessen. Für ein überbestimmtes Gleichungssystem sind so nur 5 Einzelmessungen notwendig.

Grosse Vorteile bietet auch eine Unterstützung einer Neigungsmessung mittels des Geräts durch die Messungen des Videotrackingsystems. Das Videotrackingsystem misst jeweils die Gesamtrotationsmatrix $R_{1j}$ (Rotation der 1. Kameraorientierung zur Kameraorientierung des j. Bildes). Notwendig ist nur noch eine anfängliche Neigungsmessung zum Zeitpunkt der ersten Bildaufnahme. Alle weiteren Neigungen werden durch die Gleichung (4) berechnet.

$$\vec{g}_j = \overline{\overline{R}}_{1j} \cdot \vec{g}_1 \qquad (4)$$

Anstelle der herkömmlichen Kalibration mit Ansteuern vorgeschriebener Positionen und Einzelmessungen im Stillstand lassen sich so Messungen auch während einer Schwenkbewegung durchführen. So gewinnt man im Verlaufe von allgemeinen Schwenkbewegungen (vereinfachte Geometrie, wenig Aufwand für den Benutzer) eine sehr grosse Anzahl an Einzelmessungen und damit eine deutliche Verbesserung der Genauigkeit in der Lösung des Ausgleichproblems zur Berechnung der Kompensationsparameter. Dieses führt zu einer wesentlich schnelleren und für den Benutzer angenehmeren Kalibrierung bei gleichzeitig erhöhter Genauigkeit.

Ist die Kalibrierung wie beschrieben erfolgt, kann durch Invertierung von Gleichung (1) aus einer Messung des Magnetfeldsensors u sowie dem vom Neigungssensor gemessenen Vektor des Schwerefeldes g der gesuchte Azimutwinkel a berechnet werden.

Wenn sich die magnetische Eigenschaft der Kompassumgebung nach der Kalibrierung verändert, ist die Störunterdrückung evtl. nicht mehr optimal parametriert, sodass es zu Messfehlern kommt. Um den Benutzer zu warnen, wenn eine erneute Kalibrierung des Kompasses notwendig ist, wird das Videotrackingsystem bei genauigkeitskritischen Messungen verwendet, um die vom Kompass gemessenen Orientierungen zu kontrollieren. Stimmt die Differenz zweier vom Kompass gemessener Orientierungen nicht mit der vom Videotrackingsystem gemessenen Orientierungsänderung überein, ist dieses zum Beispiel auf neue bei der Kalibrierung nicht berücksichtigte magnetische Störungen zurückzuführen. Es kann vom Benutzer eine Rekalibrierung des Systems erzwungen und/oder eine direkte Verbesserung der Messwerte durch eine algorithmische Sensorfusion (Sensoren DMC, Videotrackingsystem) zum Beispiel mit einem Kalmanfilter verwendet werden. Die Sensorfusion kann zur Korrektur natürlich auch neben den beschriebenen Sensoren noch andere (auch externe) Sensoren verwenden, beispielsweise Messungen von IMU oder GPS.

Ein Videotrackingsystem kann durch Vorgabe von externer Information eine Transformation von seinem Kamerakoordinatensystem in ein zugrunde liegendes Kartenkoordinatensystem berechnen. Damit ist das Videotrackingsystem in der Lage, absolute Richtungsmessungen (zum Beispiel bezogen auf die magnetische Nordrichtung) zu liefern (statt der bisher verwendeten relativen Messungen). Ein Beispiel für solche externe Information sind die Kartenkoordinaten des eigenen Standortes (GPS) sowie mindestens zwei für das Videotrackingsystem sichtbare Referenzpunkte, deren Kartenkoordinaten bekannt sind. Die absoluten Richtungsmessungen des Videotrackingsystems können verwendet werden, um die Messungen des Kompasses zu kontrollieren oder zu verbessern und damit grossräumige Störungen des Erdmagnetfeldes zu kalibrieren bzw. zu kompensieren, die mit einer herkömmlichen Störunterdrückung des Kompasses nicht kompensierbar bzw. kalibrierbar wären. Es versteht sich, dass diese dargestellten Figuren nur mögliche Ausführungsbeispiele schematisch darstellen. Die verschiedenen Ansätze können im Rahmen der nachfolgenden Ansprüche ebenso miteinander sowie mit Verfahren des Stands der Technik kombiniert werden.

## Patentansprüche

1. Handhaltbares Beobachtungsgerät (1) mit

   • einem digitalen Magnetkompass (2) zur Messung von einer Magnetfeld-Richtung eines vorliegenden Magnetfelds,
   • einem Gravitationssensor zur Messung von einer Schwerefeld-Richtung des vorliegenden Schwerefelds, und
   • einer Steuer- und Auswerteeinheit (6) konfiguriert zur Bestimmung einer aussenreferenzierten Orientierung des Beobachtungsgeräts (1) abhängig von einer gemessenen Magnetfeld-Richtung und einer gemessenen Schwerefeld-Richtung und unter Anwendung einer algorithmischen Störunterdrückung, für die

   - sich auf eine Kompensation von lokalen Magnetfeld-Störeinflüssen beziehende - Kompensationsparameter gespeichert sind,

   **gekennzeichnet durch**
   • ein Videotrackingsystem (4) zur Aufnahme einer Bildsequenz und zur anhand der Bildsequenz erfolgenden Ableitung von Orientierungsänderungen des Beobachtungsgeräts (1), sowie **dadurch, dass**
   • die Steuer- und Auswerteeinheit (6) derart konfiguriert ist, dass die Bestimmung der aussenreferenzierten Orientierung ferner von durch das Videotrackingsystem (4) abgeleiteten Orientierungsänderungen beeinflusst ist, indem die gespeicherten Kompensationsparameter unter anderem auf durch das Videotrackingsystem (4) abgeleiteten Orientierungsänderungen gründen.

2. Handhaltbares Beobachtungsgerät (1) nach Anspruch 1,
   **dadurch gekennzeichnet, dass**
   durch die Auswerte- und Steuereinheit (6) eine Kalibrierfunktionalität bereitgestellt ist, welche dazu ausgestaltet ist, um im Feld eine Kalibrierung der Störunterdrückung durchzuführen, wobei für die Kalibrierung ein Ablauf von mehreren Kalibriermessungen definiert ist, insbesondere mindestens fünf, für welche das Beobachtungsgerät (1) durch einen Benutzer in mehrere unterschiedliche Drehlagen zu bringen ist, und wobei im Rahmen der Kalibrierfunktionalität automatisch Kalibriermessungsgrössen erfasst werden, darunter zumindest für jede der Kalibriermessungen eine durch den Magnetkompass (2) gemessene Magnetfeld-Richtung, insbesondere auch eine durch den Gravitationssensor gemessene Schwerefeld-Richtung, und anhand dieser Kalibriermessungsgrössen die gespeicherten Kompensationsparameter überprüft und insbesondere ggf. aktualisiert, insbesondere überschrieben, werden.

**3.** Handhaltbares Beobachtungsgerät (1) nach Anspruch 2,
**dadurch gekennzeichnet, dass**
die Steuer- und Auswerteeinheit (6) derart konfiguriert ist, dass im Rahmen der Kalibrierfunktionalität als die zum Überprüfen und ggf. Updaten der Kompensationsparameter herangezogenen Kalibriermessungsgrössen ferner automatisch Unterschiede zwischen den in den jeweiligen Kalibriermessungen eingenommenen Drehlagen des Beobachtungsgeräts (1) untereinander erfasst werden, welche anhand von durch das Videotrackingsystem (4) abgeleiteten Orientierungsänderungen berechnet werden.

**4.** Handhaltbares Beobachtungsgerät (1) nach Anspruch 3,
**dadurch gekennzeichnet, dass**
die Steuer- und Auswerteeinheit (6) derart konfiguriert ist, dass die als Teil der Kalibriermessungsgrössen erfassten Unterschiede der eingenommenen Drehlagen untereinander, welche anhand von durch das Videotrackingsystem (4) abgeleiteten Orientierungsänderungen berechnet werden, in zumindest einem rotatorischen Freiheitsgrad, nämlich bezüglich einer azimutalen Komponente, erfasst werden, insbesondere in drei rotatorischen Freiheitsgraden, d.h. bezüglich einer azimutalen, einer elevativen und einer rollwinkligen Komponente.

**5.** Handhaltbares Beobachtungsgerät (1) nach einem der Ansprüche 2 bis 4,
**dadurch gekennzeichnet, dass**
die Steuer- und Auswerteeinheit (6) derart konfiguriert ist, dass im Rahmen der Kalibrierfunktionalität zur benutzerseitigen Bringung des Beobachtungsgeräts (1) in die mehreren unterschiedlichen Drehlagen automatisch

- durch das Videotrackingsystem (4) Orientierungsänderungen abgeleitet werden,
- abhängig von den jeweils abgeleiteten Orientierungsänderungen eine jeweilige Benutzerführungsinformation abgeleitet wird hinsichtlich einer zu erfolgenden Drehlagenänderung, um dadurch eine jeweilige Drehlage von den mehreren unterschiedlichen Drehlagen zu erreichen, sowie
- über am Beobachtungsgerät (1) vorgesehene Ausgabemittel die Benutzerführungsinformation ausgegeben wird.

**6.** Handhaltbares Beobachtungsgerät (1) nach einem der Ansprüche 1 bis 5,
**dadurch gekennzeichnet, dass**
die Orientierungsänderungen des Beobachtungsgeräts (1) durch das Videotrackingsystem (4) in zumindest einem rotatorischen Freiheitsgrad, nämlich bezüglich einer azimutalen Komponente, abgeleitet werden, insbesondere in drei rotatorischen Freiheitsgraden, d.h. bezüglich einer azimutalen, einer elevativen und einer rollwinkligen Komponente.

**7.** Handhaltbares Beobachtungsgerät (1) nach einem der Ansprüche 1 bis 6,
**dadurch gekennzeichnet, dass**
das Videotrackingsystem (4) ferner konfiguriert ist zur anhand der Bildsequenz erfolgenden Ableitung von translatorischen Positionsänderungen des Beobachtungsgeräts (1), sowie dass die Bestimmung der aussenreferenzierten Orientierung ferner auch von durch das Videotrackingsystem (4) abgeleiteten translatorischen Positionsänderungen beeinflusst ist, insbesondere indem die gespeicherten Kompensationsparameter unter anderem auf durch das Videotrackingsystem (4) abgeleiteten translatorischen Positionsänderungen gründen, im Speziellen wobei die abgeleiteten translatorischen Positionsänderungen zur Kompensation von im Rahmen eines Bringens des Beobachtungsgeräts (1) in mehrere unterschiedliche Drehlagen verursachten translatorischen Ortsänderungen des Beobachtungsgeräts (1) herangezogen werden.

**8.** Handhaltbares Beobachtungsgerät (1) nach einem der Ansprüche 1 bis 7,
**dadurch gekennzeichnet, dass**
die Steuer- und Auswerteeinheit (6) konfiguriert ist zur Bestimmung von einer Serie von aussenreferenzierten Orientierungen für eine Serie von eingenommenen Drehlagen des Beobachtungsgeräts (1) und dabei die jeweiligen aussenreferenzierten Orientierungen bestimmt werden abhängig von

- einer jeweils gemessenen Magnetfeld-Richtung,
- einer jeweils gemessenen Schwerefeld-Richtung und
- Unterschieden zwischen den im Rahmen der Serie jeweils eingenommenen Drehlagen des Beobachtungsgeräts untereinander, welche anhand von durch das Videotrackingsystem (4) abgeleiteten Orientierungsänderungen berechnet werden, sowie
- unter Anwendung der algorithmischen Störunterdrückung.

**9.** Handhaltbares Beobachtungsgerät (1) nach einem der Ansprüche 1 bis 8,
**dadurch gekennzeichnet, dass**
die Steuer- und Auswerteeinheit (6) derart konfiguriert ist, dass im Rahmen einer Bestimmung von einer Serie von aussenreferenzierten Orientierungen für eine Serie von eingenommenen Drehlagen des Beobachtungsgeräts (1) die gespeicherten Kompensationsparameter automatisch überprüft werden, indem

- Unterschiede zwischen den jeweils bestimmten aussenreferenzierten Orientierungen verglichen werden mit
- Unterschieden zwischen den im Rahmen der Serie jeweils eingenommenen Drehlagen des Beobachtungsgeräts (1) untereinander, welche anhand von durch das Videotrackingsystem (4) abgeleiteten Orientierungsänderungen berechnet werden,

insbesondere wobei für den Fall, dass eine Abweichung der Unterschiede zwischen den jeweils bestimmten aussenreferenzierten Orientierungen von den - anhand von durch das Videotrackingsystem (4) abgeleiteten Orientierungsänderungen - berechneten Unterschieden ein definiertes zugelassenes Abweichungs-Höchstmass übersteigt, automatisch über am Beobachtungsgerät (1) vorgesehene Ausgabemittel eine eine neuerliche Kalibrierung empfehlende oder anstossende Benutzerinformation ausgegeben wird.

**10.** Handhaltbares Beobachtungsgerät (1) nach einem der Ansprüche 1 bis 9,
**dadurch gekennzeichnet, dass**
durch die Auswerte- und Steuereinheit (6) eine Referenzier-Funktionalität bereitgestellt ist, welche dazu ausgestaltet ist, um im Feld eine Magnetkompass-unabhängige Aussenreferenzierung bezüglich einer Orientierung des Beobachtungsgeräts (1) herzustellen, wofür ein Ablauf von mindestens einer Anzielung von einem bekannten Ziel, über das die Aussenreferenzierung ermöglichende Information gespeichert ist oder per Benutzereingabe vorliegt, definiert ist, für welche Anzielung das Beobachtungsgerät (1) durch einen Benutzer in eine das mindestens eine Ziel anzielende Referenzier-Drehlage zu bringen ist, und dabei in dieser Referenzier-Drehlage sowie im Fortgang automatisch fortlaufend durch das Videotrackingsystem (4) eine Bildsequenz aufgenommen wird und anhand dessen Orientierungsänderungen des Beobachtungsgeräts (1) abgeleitet werden, sodass im Fortgang automatisch aussenreferenzierte Orientierungen bestimmbar sind auch ausschliesslich abhängig von

- Unterschieden zwischen der Referenzier-Drehlage und jeweiligen im Fortgang eingenommenen Drehlagen des Beobachtungsgeräts (1) untereinander, wobei diese Unterschiede anhand von durch das Videotrackingsystem (4) abgeleiteten Orientierungsänderungen berechnet werden, sowie
- unter Einbeziehung der die Aussenreferenzierung ermöglichenden vorliegenden Information über das bekannte Ziel.

**11.** Handhaltbares Beobachtungsgerät (1) nach Anspruch 10,
**dadurch gekennzeichnet, dass**
die Steuer- und Auswerteeinheit (6) derart konfiguriert ist, dass im Rahmen einer Bestimmung von einer aussenreferenzierten Orientierung für eingenommene Drehlagen des Beobachtungsgeräts (1) automatisch eine Überprüfung insbesondere hinsichtlich Beeinflussung durch regionale Magnetfeld-Störungen durchführbar ist anhand eines Vergleichs der bestimmten aussenreferenzierten Orientierung mit einer separat im Rahmen der Referenzier-Funktionalität bestimmten aussenreferenzierten Orientierung, insbesondere wobei anhand dessen automatisch eine Kompensation von regionalen Magnetfeld-Störeinflüssen erfolgt.

**12.** Handhaltbares Beobachtungsgerät (1) nach einem der Ansprüche 1 bis 11,
**dadurch gekennzeichnet, dass**
der digitale Magnetkompass (2) mit Neigungssensoren ausgestattet ist, wobei Messungen der Neigungssensoren von Orientierungsänderungsmessungen durch das Videotrackingsystem unterstützbar sind, und/oder die Auswerte- und Steuereinheit (6) derart konfiguriert ist, dass bei der Bestimmung der aussenreferenzierten Orientierung des Beobachtungsgeräts (1) Messwerte einer Inertialmesseinheit und/oder Navigationsdaten, insbesondere GPS-Daten, einbeziehbar sind.

**13.** Handhaltbares Beobachtungsgerät (1) nach einem der Ansprüche 1 bis 12,
**dadurch gekennzeichnet, dass**

- das Beobachtungsgerät (1) mindestens einen durchgehenden Beobachtungsstrahlengang mit einem Eingangsobjektiv und einem Ausgangsokular für einen Beobachter aufweist und/oder
- das Videotrackingsystem ein Objektiv (8) aufweist, mit dem zumindest ein Teil einer vom Objektiv (8) erfassten Umgebung auf einen Kamerasensor (5) abbildbar ist, insbesondere wobei das Objektiv (8) als ein zusammengesetztes Objektiv mit einem vorderen Objektivteil (8a) und einem hinteren Objektivteil (8b) ausgebildet ist, insbesondere wobei das vordere Objektivteil (8a) zudem als ein Objektiv für ein Teleskop zur visuellen Beobachtung verwendbar ist.

14. Verfahren zum Bestimmen einer aussenreferenzierten Orientierung eines handhaltbaren Beobachtungsgeräts (1) mit

- einem Messen von einer Magnetfeld-Richtung eines vorliegenden Magnetfelds durch einen im Beobachtungsgerät (1) vorgesehenen digitalen Magnetkompass (2),
- einem Messen von einer Schwerefeld-Richtung eines vorliegenden Schwerefelds durch einen im Beobachtungsgerät (1) vorgesehenen Gravitationssensor, und
- einem Bestimmen der aussenreferenzierten Orientierung des Beobachtungsgeräts (1) abhängig von der gemessenen Magnetfeld-Richtung und der gemessenen Schwerefeld-Richtung und unter Anwenden einer algorithmischen Störunterdrückung, für die - sich auf eine Kompensation von lokalen Magnetfeld-Störeinflüssen beziehende - Kompensationsparameter vorliegen,

**dadurch gekennzeichnet, dass**
das Bestimmen der aussenreferenzierten Orientierung ferner beeinflusst ist von durch ein im Beobachtungsgerät (1) vorgesehenes Videotrackingsystem (4) abgeleiteten Orientierungsänderungen, wobei die Orientierungsänderungen anhand von einer der durch das Videotrackingsystem (4) aufgenommenen Bildsequenz abgeleitet sind, wobei die Beeinflussung dadurch gegeben ist, dass die gespeicherten Kompensationsparameter unter anderem auf durch das Videotrackingsystem (4) abgeleiteten Orientierungsänderungen gründen, im Speziellen wobei im Rahmen des Verfahrens ein Vorgehen erfolgt, zu welchem eine im Beobachtungsgerät (1) vorgesehene Steuer- und Auswerteeinheit (6) und/oder das Videotrackingsystem (4) gemäss einem der Ansprüche 1 bis 13 konfiguriert ist, insbesondere wobei das Verfahren durchgeführt wird mit einem Beobachtungsgerät (1) nach einem der Ansprüche 1 bis 13.

15. Computerprogrammprodukt mit Programmcode, der auf einem maschinenlesbaren Träger gespeichert ist, zur Steuerung bzw. Durchführung des Verfahrens nach Anspruch 14, insbesondere zur Steuerung bzw. Durchführung eines Vorgehens, zu welchem die Steuer- und Auswerteeinheit (6) gemäss einem der Ansprüche 1 bis 13 konfiguriert ist, wenn das Programm auf einer elektronischen Datenverarbeitungseinheit ausgeführt wird, im Speziellen wobei die elektronische Datenverarbeitungseinheit als Steuer- und Auswerteeinheit (4) eines Beobachtungsgeräts (1) nach einem der Ansprüche 1 bis 13 dient.

**Claims**

1. Handheld observation device (1) comprising

- a digital magnetic compass (2) for measuring a magnetic field direction of a magnetic field present,
- a gravitation sensor for measuring a gravitational field direction of the gravitational field present, and
- a control and evaluation unit (6) configured for determining an externally referenced orientation of the observation device (1) depending on a measured magnetic field direction and a measured gravitational field direction and with application of an algorithmic disturbance suppression, for which compensation parameters - relating to a compensation of local magnetic field disturbance influences - are stored,
**characterized by**
- a video tracking system (4) for recording an image sequence and for deriving - carried out on the basis of the image sequence - orientation changes of the observation device (1),
and in that
- the control and evaluation unit (6) is configured in such a way that the determination of the externally referenced orientation is furthermore influenced by orientation changes derived by the video tracking system (4), by virtue of the fact that the stored compensation parameters are based, inter alia, on orientation changes derived by the video tracking system (4).

2. Handheld observation device (1) according to Claim 1,
**characterized in that**
the evaluation and control unit (6) provides a calibration functionality designed to carry out a calibration of the disturbance suppression in the field, wherein for the calibration a sequence of a plurality of calibration measurements is defined, in particular at least five, for which the observation device (1) is to be brought by a user into a plurality of different rotational positions, and wherein calibration measurement variables are automatically detected in the context of the calibration functionality, including - at least for each of the calibration measurements - a magnetic field direction measured by the magnetic compass (2), in particular also a gravitational field direction measured by the gravitation sensor, and on the basis of said calibration measurement variables the stored compensation parameters are checked and in particular, if appropriate, updated, in particular overwritten.

3. Handheld observation device (1) according to Claim 2,
**characterized in that**
the control and evaluation unit (6) is configured in such a way that in the context of the calibration functionality, as the calibration measurement variables used for checking and, if appropriate, updating the compensation parameters, furthermore differences between the rotational positions of the observation device (1) adopted in the respective calibration measurements are automatically detected among one another, which are calculated on the basis of orientation changes derived by the video tracking system (4).

4. Handheld observation device (1) according to Claim 3,
**characterized in that**
the control and evaluation unit (6) is configured in such a way that the differences - detected as part of the calibration measurement variables - in the adopted rotational positions among one another, which are calculated on the basis of orientation changes derived by the video tracking system (4), are detected in at least one rotational degree of freedom, namely with respect to an azimuthal component, in particular in three rotational degrees of freedom, i.e. with respect to an azimuthal, an elevational and a rolling-angle component.

5. Handheld observation device (1) according to any one of Claims 2 to 4,
**characterized in that**
the control and evaluation unit (6) is configured in such a way that in the context of the calibration functionality for bringing the observation device (1) into the plurality of different rotational positions on the part of the user automatically

• orientation changes are derived by the video tracking system (4),
• depending on the orientation changes respectively derived a respective item of user guidance information is derived regarding a rotational position change to be carried out, in order thereby to attain a respective rotational position from the plurality of different rotational positions, and
• the user guidance information is output via output means provided on the observation device (1) .

6. Handheld observation device (1) according to any one of Claims 1 to 5,
**characterized in that**
the orientation changes of the observation device (1) are derived by the video tracking system (4) in at least one rotational degree of freedom, namely with respect to an azimuthal component, in particular in three rotational degrees of freedom, i.e. with respect to an azimuthal, an elevational and a rolling-angle component.

7. Handheld observation device (1) according to any one of Claims 1 to 6,
**characterized in that**
the video tracking system (4) is furthermore configured for deriving - carried out on the basis of the image sequence - translational position changes of the observation device (1), and **in that** the determination of the externally referenced orientation is furthermore also influenced by translational position changes derived by the video tracking system (4), in particular by virtue of the fact that the stored compensation parameters are based, inter alia, on translational position changes derived by the video tracking system (4), especially wherein the derived translational position changes are used for the compensation of translational location changes of the observation device (1) that are caused in the context of bringing the observation device (1) into a plurality of different rotational positions.

8. Handheld observation device (1) according to any one of Claims 1 to 7,
**characterized in that**
the control and evaluation unit (6) is configured for determining a series of externally referenced orientations for a series of adopted rotational positions of the observation device (1) and in this case the respective externally referenced orientations are determined depending on

• a respectively measured magnetic field direction,

• a respectively measured gravitational field direction, and
• differences between the rotational positions of the observation device respectively adopted in the context of the series among one another, which are calculated on the basis of orientation changes derived by the video tracking system (4), and
• with application of the algorithmic disturbance suppression.

9. Handheld observation device (1) according to any one of Claims 1 to 8,
**characterized in that**
the control and evaluation unit (6) is configured in such a way that in the context of a determination of a series of externally referenced orientations for a series of adopted rotational positions of the observation device (1) the stored compensation parameters are automatically checked by virtue of the fact that

• differences between the respectively determined externally referenced orientations are compared with
• differences between the rotational positions of the observation device (1) respectively adopted in the context of the series among one another, which are calculated on the basis of orientation changes derived by the video tracking system (4),

in particular wherein for the case where a deviation of the differences between the respectively determined externally referenced orientations from the differences calculated - on the basis of orientation changes derived by the video tracking system (4) - exceeds a defined permitted deviation maximum, an item of user information recommending or initiating a further calibration is output automatically via output means provided on the observation device (1).

10. Handheld observation device (1) according to any one of Claims 1 to 9,
**characterized in that**
the evaluation and control unit (6) provides a referencing functionality designed to produce a magnetic-compass-independent external referencing relative to an orientation of the observation device (1) in the field, for which purpose a sequence of at least one targeting of a known target is defined, about which target information enabling the external referencing is stored or is present by way of user input, for which targeting the observation device (1) is to be brought by a user into a referencing rotational position targeting the at least one target, and in this case in said referencing rotational position and in continuation an image sequence is automatically continuously recorded by the video tracking system (4) and orientation changes of the observation device (1) are derived on the basis thereof, such that in continuation automatically externally referenced orientations are determinable also exclusively depending on

• differences between the referencing rotational position and respective rotational positions of the observation device (1) adopted in continuation among one another, wherein said differences are calculated on the basis of orientation changes derived by the video tracking system (4), and
• with inclusion of the available information about the known target enabling the external referencing.

11. Handheld observation device (1) according to Claim 10,
**characterized in that**
the control and evaluation unit (6) is configured in such a way that in the context of a determination of an externally referenced orientation for adopted rotational positions of the observation device (1) a check in particular with regard to influencing by regional magnetic field disturbances can be carried out automatically on the basis of a comparison of the determined externally referenced orientation with an externally referenced orientation determined separately in the context of the referencing functionality, in particular wherein a compensation of regional magnetic field disturbance influences is carried out automatically on the basis thereof.

12. Handheld observation device (1) according to any one of Claims 1 to 11,
**characterized in that**
the digital magnetic compass (2) is equipped with inclination sensors, wherein measurements of the inclination sensors can be assisted by orientation change measurements by the video tracking system, and/or the evaluation and control unit (6) is configured in such a way that measurement values of an inertial measurement unit and/or navigation data, in particular GPS data, can be included in the determination of the externally referenced orientation of the observation device (1).

13. Handheld observation device (1) according to any one of Claims 1 to 12,
**characterized in that**

• the observation device (1) has at least one continuous observation beam path having an input objective and an output eyepiece for an observer, and/or

• the video tracking system has an objective (8), by which at least part of surroundings captured by the objective (8) can be imaged onto a camera sensor (5), in particular wherein the objective (8) is embodied as a compound objective having a front objective part (8a) and a rear objective part (8b), in particular wherein the front objective part (8a) is additionally usable as an objective for a telescope for visual observation.

**14.** Method for determining an externally referenced orientation of a handheld observation device (1) comprising

• measuring a magnetic field direction of a magnetic field present by means of a digital magnetic compass (2) provided in the observation device (1),

• measuring a gravitational field direction of a gravitational field present by means of a gravitation sensor provided in the observation device (1), and

• determining the externally referenced orientation of the observation device (1) depending on the measured magnetic field direction and the measured gravitational field direction and with application of an algorithmic disturbance suppression, for which compensation parameters - relating to a compensation of local magnetic field disturbance influences - are present,

**characterized in that**

determining the externally referenced orientation is furthermore influenced by orientation changes derived by a video tracking system (4) provided in the observation device (1), wherein the orientation changes are derived on the basis of an image sequence recorded by the video tracking system (4), wherein the influencing is afforded by virtue of the fact that the stored compensation parameters are based, inter alia, on orientation changes derived by the video tracking system (4),

especially wherein a procedure for which a control and evaluation unit (6), which is foreseen in the observation device (1), and/or the video tracking system (4) are/is configured according to any one of Claims 1 to 13 is carried out in the context of the method,

in particular wherein the method is carried out by means of an observation device (1) according to any one of Claims 1 to 13.

**15.** Computer program product comprising program code, which is stored on a machine-readable carrier, for controlling or carrying out the method according to Claim 14, in particular for controlling or carrying out a procedure for which the control and evaluation unit (6) is configured according to any one of Claims 1 to 13, if the program is executed on an electronic data processing unit, especially wherein the electronic data processing unit serves as the control and evaluation unit (4) of an observation device (1) according to any one of Claims 1 to 13.

**Revendications**

**1.** Appareil d'observation portatif (1) comprenant

• un compas magnétique numérique (2) pour mesurer une direction de champ magnétique d'un champ magnétique existant,

• un capteur gravitationnel pour mesurer une direction de champ gravitationnel du champ gravitationnel existant, et

• une unité de commande et d'évaluation (6) configurée pour déterminer une orientation à référence externe de l'appareil d'observation (1) en fonction d'une direction de champ magnétique mesurée et d'une direction de champ gravitationnel mesurée et en utilisant une suppression d'interférences algorithmique pour laquelle des paramètres de compensation relatifs à une compensation des perturbations locales du champ magnétique sont stockés,

**caractérisé par**

• un système de poursuite vidéo (4) pour enregistrer une séquence d'images et pour dériver des changements d'orientation de l'appareil d'observation (1) sur la base de la séquence d'images, et par le fait que

• l'unité de commande et d'évaluation (6) est configurée de telle sorte que la détermination de l'orientation à référence externe est en outre influencée par des changements d'orientation dérivés par le système de poursuite vidéo (4), les paramètres de compensation stockés étant basés entre autres sur des changements d'orientation dérivés par le système de poursuite vidéo (4),

**2.** Appareil d'observation portatif (1) selon la revendication 1,
**caractérisé en ce**

**qu'**une fonctionnalité d'étalonnage est fournie par l'unité d'évaluation et de commande (6), laquelle est conçue pour effectuer un étalonnage de la suppression d'interférences sur le terrain, une séquence de plusieurs mesures d'étalonnage étant définie pour l'étalonnage, en particulier au moins cinq, pour lesquelles l'appareil d'observation (1) doit être amené dans plusieurs positions de rotation différentes par un utilisateur, et, dans le cadre de la fonctionnalité d'étalonnage, des grandeurs de mesure d'étalonnage étant automatiquement détectées, comprenant, au moins pour chacune des mesures d'étalonnage, une direction de champ magnétique mesurée par le compas magnétique (2), en particulier également une direction de champ gravitationnel mesurée par le capteur gravitationnel, et les paramètres de compensation stockés étant vérifiés et en particulier, si nécessaire, mis à jour, en particulier écrasés, sur la base de ces grandeurs de mesure d'étalonnage.

**3.** Appareil d'observation portatif (1) selon la revendication 2,
**caractérisé en ce**

**que** l'unité de commande et d'évaluation (6) est configurée de telle sorte que, dans le cadre de la fonctionnalité d'étalonnage, des différences entre elles des positions de rotation de l'appareil d'observation (1) prises lors des mesures d'étalonnage respectives, lesquelles sont calculées sur la base des changements d'orientation dérivés par le système de poursuite vidéo (4), sont également détectées automatiquement en tant que grandeurs de mesure d'étalonnage utilisées pour vérifier et, si nécessaire, mettre à jour les paramètres de compensation.

**4.** Appareil d'observation portatif (1) selon la revendication 3,
**caractérisé en ce**

**que** l'unité de commande et d'évaluation (6) est configurée de telle sorte que les différences entre elles des positions de rotation prises, lesquelles sont calculées sur la base de changements d'orientation dérivés du système de poursuite vidéo (4), qui sont détectés comme partie des grandeurs de mesure d'étalonnage, sont détectées dans au moins un degré de liberté de rotation, à savoir par rapport à une composante azimutale, en particulier dans trois degrés de liberté de rotation, c'est-à-dire par rapport à une composante azimutale, une composante d'élévation et une composante d'angle de roulis.

**5.** Appareil d'observation portatif (1) selon l'une des revendications 2 à 4,
**caractérisé en ce**

**que** l'unité de commande et d'évaluation (6) est configurée de telle sorte que, dans le cadre de la fonctionnalité d'étalonnage, pour l'amenée de l'appareil d'observation (1) dans les différentes positions de rotation par l'utilisateur, automatiquement,

- des changements d'orientation sont dérivés par le système de poursuite vidéo (4),
- en fonction des changements d'orientation dérivés respectifs, une information de guidage de l'utilisateur respective est dérivée en ce qui concerne un changement de position de rotation à effectuer afin d'atteindre une position de rotation respective parmi les différentes positions de rotation, et
- l'information de guidage de l'utilisateur est délivrée par des moyens de sortie prévus sur l'appareil d'observation (1).

**6.** Appareil d'observation portatif (1) selon l'une des revendications 1 à 5,
**caractérisé en ce**

**que** les changements d'orientation de l'appareil d'observation (1) sont dérivés par le système de poursuite vidéo (4) dans au moins un degré de liberté de rotation, à savoir par rapport à une composante azimutale, en particulier dans trois degrés de liberté de rotation, c'est-à-dire par rapport à une composante azimutale, une composante d'élévation et une composante d'angle de roulis.

**7.** Appareil d'observation portatif (1) selon l'une des revendications 1 à 6,
**caractérisé en ce**

**que** le système de poursuite vidéo (4) est en outre configuré pour dériver des changements de position de translation de l'appareil d'observation (1) sur la base de la séquence d'images, et **en ce que** la détermination de l'orientation à référence externe est en outre influencée par des changements de position de translation dérivés par le système de poursuite vidéo (4), en particulier du fait que les paramètres de compensation stockés sont basés, entre autres, sur des changements de position de translation dérivés par le système de poursuite vidéo (4), en particulier les changements de position de translation dérivés étant utilisés pour compenser des changements de position de translation de l'appareil d'observation (1) provoqués par l'amenée de l'appareil d'observation (1) dans plusieurs positions de rotation différentes.

8. Appareil d'observation portatif (1) selon l'une des revendications 1 à 7,
   **caractérisé en ce**
   **que** l'unité de commande et d'évaluation (6) est configurée pour déterminer une série d'orientations à référence externe pour une série de positions de rotation prises par l'appareil d'observation (1) et les orientations à référence externe respectives sont déterminées en fonction

   • d'une direction de champ magnétique mesurée,
   • d'une direction de champ gravitationnel mesurée et
   • de différences entre elles des positions de rotation prises par l'appareil d'observation dans le cadre de la série, lesquelles sont calculées sur la base de changements d'orientation dérivés par le système de poursuite vidéo (4), et
   • en utilisant la suppression d'interférences algorithmique.

9. Appareil d'observation portatif (1) selon l'une des revendications 1 à 8,
   **caractérisé en ce**
   **que** l'unité de commande et d'évaluation (6) est configurée de telle sorte que, dans le cadre d'une détermination d'une série d'orientations à référence externe pour une série de positions de rotation prises par l'appareil d'observation (1), les paramètres de compensation stockés sont vérifiés automatiquement

   • en comparant les différences entre les orientations à référence externe déterminées respectives avec
   • les différences entre elles des positions de rotation respectives prises par l'appareil d'observation (1) dans le cadre de la série, lesquelles sont calculées sur la base des changements d'orientation dérivés par le système de poursuite vidéo (4),

   en particulier une information à l'utilisateur recommandant ou déclenchant un nouvel étalonnage étant automatiquement émise par l'intermédiaire de moyens de sortie prévus sur l'appareil d'observation (1) dans le cas où un écart entre les différences entre les orientations à référence externe déterminées et les différences calculées sur la base des changements d'orientation dérivés par le système de poursuite vidéo (4) dépasse un écart maximal autorisé défini.

10. Appareil d'observation portatif (1) selon l'une des revendications 1 à 9,
    **caractérisé en ce**
    **qu'**une fonctionnalité de référencement est fournie par l'unité d'évaluation et de commande (6), laquelle est conçue pour produire sur le terrain un référencement externe indépendant du compas magnétique par rapport à une orientation de l'appareil d'observation (1), pour laquelle une séquence d'au moins une visée d'une cible connue, sur laquelle l'information permettant le référencement externe est stockée ou est présente par une entrée de l'utilisateur, est définie, pour laquelle visée l'appareil d'observation (1) doit être amené par un utilisateur dans une position de rotation de référence visant ladite au moins une cible, et dans cette position de rotation de référence et par la suite, automatiquement en continu, une séquence d'images est enregistrée par le système de poursuite vidéo (4), sur la base de laquelle sont dérivés des changements d'orientation de l'appareil d'observation (1), de sorte que par la suite, automatiquement, des orientations à référence externe peuvent aussi être déterminées exclusivement en fonction de

    • différences entre la position de rotation de référence et les positions de rotation respectives prises par l'appareil d'observation (1) par la suite, ces différences étant calculées sur la base de changements d'orientation dérivés par le système de poursuite vidéo (4), et
    • en tenant compte de l'information disponible sur la cible connue qui permet le référencement externe.

11. Appareil d'observation portatif (1) selon la revendication 10,
    **caractérisé en ce**
    **que** l'unité de commande et d'évaluation (6) est configurée de telle sorte que, dans le cadre de la détermination d'une orientation à référence externe pour des positions de rotation prises par l'appareil d'observation (1), une vérification peut être effectué automatiquement, en particulier en ce qui concerne l'influence des perturbations régionales du champ magnétique, sur la base d'une comparaison de l'orientation à référence externe déterminée avec une orientation à référence externe déterminée séparément dans le cadre de la fonctionnalité de référencement, en particulier les perturbations régionales du champ magnétique étant automatiquement compensées sur cette base.

**12.** Appareil d'observation portatif (1) selon l'une des revendications 1 à 11,
**caractérisé en ce**
**que** le compas magnétique numérique (2) est équipé de capteurs d'inclinaison, les mesures des capteurs d'inclinaison pouvant être assistées par des mesures de changement d'orientation par le système de poursuite vidéo et/ou l'unité d'évaluation et de commande (6) étant configurée de telle sorte que des valeurs mesurées d'une unité de mesure inertielle et/ou des données de navigation, en particulier des données GPS, peuvent être incluses lors de la détermination de l'orientation à référence externe de l'appareil d'observation (1).

**13.** Appareil d'observation portatif (1) selon l'une des revendications 1 à 12,
**caractérisé en ce que**

• l'appareil d'observation (1) présente au moins un chemin optique d'observation continu avec un objectif d'entrée et un oculaire de sortie pour un observateur et/ou
• le système de poursuite vidéo présente un objectif (8) avec lequel au moins une partie d'un environnement détecté par l'objectif (8) peut être représentée sur un capteur de caméra (5), en particulier l'objectif (8) étant réalisé sous la forme d'un objectif composite avec une partie d'objectif avant (8a) et une partie d'objectif arrière (8b), en particulier la partie d'objectif avant (8a) pouvant en outre être utilisée comme objectif pour un télescope pour l'observation visuelle.

**14.** Procédé pour déterminer une orientation à référence externe d'un appareil d'observation portatif (1), comprenant

• une mesure d'une direction de champ magnétique d'un champ magnétique existant par un compas magnétique numérique (2) prévu dans l'appareil d'observation (1),
• une mesure d'une direction de champ gravitationnel d'un champ gravitationnel existant par un capteur gravitationnel prévu dans l'appareil d'observation (1), et
• une détermination de l'orientation à référence externe de l'appareil d'observation (1) en fonction de la direction de champ magnétique mesurée et de la direction de champ gravitationnel mesurée et en utilisant une suppression d'interférences algorithmique pour laquelle des paramètres de compensation relatifs à une compensation des perturbations locales du champ magnétique sont présents,

**caractérisé en ce**
**que** la détermination de l'orientation à référence externe est en outre influencée par des changements d'orientation dérivés par un système de poursuite vidéo (4) prévu dans l'appareil d'observation (1), les changements d'orientation étant dérivés sur la base d'une séquence d'images enregistrées par le système de poursuite vidéo (4), l'influence résultant du fait que les paramètres de compensation stockés sont basés, entre autres, sur des changements d'orientation dérivés par le système de poursuite vidéo (4), en particulier une procédure se déroulant dans le cadre du procédé, par laquelle une unité de commande et d'évaluation (6) prévue dans l'appareil d'observation (1) et/ou le système de poursuite vidéo (4) est configuré(e) selon l'une des revendications 1 à 13,
en particulier le procédé étant mis en oeuvre avec un appareil d'observation (1) selon l'une des revendications 1 à 13.

**15.** Produit programme informatique avec un code de programme stocké sur un support lisible par machine, pour commander ou mettre en oeuvre le procédé selon la revendication 14, en particulier pour commander ou mettre en oeuvre une procédure par laquelle l'unité de commande et d'évaluation (6) est configurée selon l'une des revendications 1 à 13 lorsque le programme est exécuté sur une unité électronique de traitement de données, en particulier l'unité électronique de traitement de données servant d'unité de commande et d'évaluation (4) d'un appareil d'observation (1) selon l'une des revendications 1 à 13.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6009629 A
- US 5117375 A
- GB 2128749 A
- US 6539639 B
- US 20090306892 A

- US 8370097 B
- US 6009929 A
- US 7002551 B
- EP 2600109 A
- US 20110275408 A


**In der Beschreibung aufgeführte Nicht-Patentliteratur**

- A NON-LINEAR, TWO-STEP ESTIMATION ALGORITHM FOR CALIBRATING SOLID-STATE STRAPDOWN MAGNETOMETERS. **D. GEBRE-EGZIABHER ; G.H. ELKAIM ; J.D. POWELL ; B.W. PARKINSON.** Proceedings of the International Conference on Integrated Navigation System. Department of Aeronautics and Astronautics at Stanford University, 28. Mai 2001, 290-297

- **RICHARD HARTLEY ; ANDREW ZISSERMAN.** Multiple View Geometry in Computer Vision. Cambridge University Press, Marz 2004